(19) Europäisches Patentamt
European Patent Office
Office européen des brevets

(11) **EP 4 170 558 A1**

(12) **EUROPEAN PATENT APPLICATION**

(43) Date of publication:
**26.04.2023 Bulletin 2023/17**

(51) International Patent Classification (IPC):
**G06N 7/00** *(2023.01)*      **G06N 3/04** *(2023.01)*

(21) Application number: **22180698.7**

(22) Date of filing: **23.06.2022**

(52) Cooperative Patent Classification (CPC):
**G06N 7/01;** G06N 3/044

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.10.2021 JP 2021171380**

(71) Applicant: **FUJITSU LIMITED**
**Kawasaki-shi, Kanagawa 211-8588 (JP)**

(72) Inventors:
- **Konoshima, Makiko**
  **Kawasaki-shi, Kanagawa, 211-8588 (JP)**
- **Tamura, Hirotaka**
  **Yokohama-shi, Kanagawa, 223-0066 (JP)**
- **Ohkubo, Jun**
  **Saitama-shi, Saitama, 338-8570 (JP)**

(74) Representative: **Hoffmann Eitle**
**Patent- und Rechtsanwälte PartmbB**
**Arabellastraße 30**
**81925 München (DE)**

(54) **PROGRAM, DATA PROCESSING METHOD, AND DATA PROCESSING DEVICE**

(57) A program for causing a computer to execute processing that searches for a combination of a plurality of state variable values with which a value of an evaluation function is minimized or maximized by a Markov chain Monte Carlo (MCMC) method, the processing including: reading time-series data from a storage device storing the time-series data indicating a time change of the value of the evaluation function at a time of a search by the MCMC method that uses a first temperature; generating a plurality of time-series data sets that includes the value of the evaluation function for each period on a basis of the time-series data; calculating an index value based on magnitude of correlation between each of the plurality of time-series data sets; and determining a second temperature to be used for the search based on the index value.

FIG. 1

EP 4 170 558 A1

**Description**

FIELD

The embodiments discussed herein are related to a program, a data processing method, and a data processing device.

BACKGROUND

There is an Ising device (also called a Boltzmann machine) that uses an Ising-type evaluation function (also called an energy function, etc.) as a device that calculates a large-scale discrete optimization problem which Neumann computers are not good at.

The Ising device transforms a discrete optimization problem into an Ising model that represents spin behavior of a magnetic material. Then, the Ising device searches for a state of the Ising model in which a value (corresponding to energy) of the Ising-type evaluation function is minimized by a Markov chain Monte Carlo method such as simulated annealing, a replica exchange method, or the like. The state where the minimum value of local minimum values of the evaluation function is reached is to be the optimum solution. Note that the Ising device is capable of searching for the state where the value of the evaluation function is maximized by changing the sign of the evaluation function. A state of the Ising model may be represented by a combination of a plurality of state variables. As a value of each of the state variables, 0 or 1 may be used.

The Ising-type evaluation function is defined by, for example, a quadratic function such as the following equation (1).

[Equation 1]

$$E = -\sum_{i=1}^{N}\sum_{j>i}^{N} W_{ij} x_i x_j - \sum_{i=1}^{N} b_i x_i \qquad (1)$$

The first term on the right side indicates a value obtained by summing up products of values (0 or 1) of two state variables and a weight value (indicating the strength of correlation between the two state variables) for all combinations of N state variables of the Ising model with neither an omission nor an overlap. A state variable with an identification number i is represented by $x_i$, a state variable with an identification number j is represented by $x_j$, and a weight value indicating the magnitude of the correlation between the state variables with the identification numbers i and j is represented by $W_{ij}$. The second term on the right side indicates a value obtained by summing up products of a bias coefficient and a state variable for each identification number. A bias coefficient for the identification number = i is represented by $b_i$.

Furthermore, an energy change amount ($\Delta E_i$) associated with a change in the value of $x_i$ is expressed by the following equation (2).

[Equation 2]

$$\Delta E_i = -\Delta x_i (\sum_{j}^{N} W_{ij} x_j + b_i) = -\Delta x_i h_i \qquad (2)$$

In the equation (2), $\Delta x_i$ becomes -1 when $x_i$ changes from 1 to 0, and $\Delta x_i$ becomes 1 when $x_i$ changes from 0 to 1. Note that $h_i$ is called a local field, and $\Delta E_i$ is obtained by multiplying $h_i$ by a sign (+1 or -1) according to $\Delta x_i$.

Then, for example, in a case where $\Delta E_i$ is smaller than a noise value obtained on the basis of a random number and a temperature used in the Markov chain Monte Carlo method, a process of updating the value of $x_i$ to generate state transition (process of one Monte Carlo step) is repeated.

In a case where the simulated annealing, which is one of the Markov chain Monte Carlo methods, is applied, the temperature is determined to decrease over time according to a function using time or a predetermined variable. Furthermore, in a case where the replica exchange method, which is another example of the Markov chain Monte Carlo methods, is applied, different temperatures are set for individual replicas.

International Publication Pamphlet No. WO 2019/234837, Japanese Laid-open Patent Publication No. 2020-46718, S. Geman and D. Geman, "Stochastic Relaxation, Gibbs Distributions, and the Bayesian Restoration of Images", IEEE Transactions on Pattern Analysis and Machine Intelligence, Vol. PAMI-6, No.6, November 1984, Hidetoshi Nishimori, "Theory of Spin Glass and Statistical-Mechanical Informatics", Iwanami Shoten, Publishers, p. 183, 25 July 2007, T. Yokota, M. Konoshima, H. Tamura, and J. Ohkubo, "Derivation of QUBO Formulations for Sparse Estimation", arXiv: 2001.03715v2 [quant-ph], 27 January 2020, K. Hukushima, "Domain-Wall Free-Energy of Spin Glass Models: Numerical Method and Boundary Conditions", Physical Review E, Vol. 60, No. 4, October 1999, and A. Baba and T. Komatsuzaki, "Construction of Effective Free Energy Landscape from Single-Molecule Time Series", PNAS, Vol. 104, No. 49, pp. 19297-19302, 4 December 2007 are disclosed as related art.

## SUMMARY

### TECHNICAL PROBLEM

The temperature used in the Markov chain Monte Carlo method may be determined on the basis of a variable for determining a temperature input by a user.

However, it is difficult to determine an appropriate variable value by which a temperature corresponding to the discrete optimization problem to be calculated is obtained. This is because, for example, a difficulty level of searching for a solution may change depending on the determined temperature. It takes more effort and time to obtain the appropriate variable value by trial and error.

In one aspect, the embodiments aim to provide a program, a data processing method, and a data processing device capable of automatically determining a temperature used in the Markov chain Monte Carlo method according to a discrete optimization problem to be calculated.

### SOLUTION TO PROBLEM

According to an aspect of the embodiments, there is provided a program comprising instructions which, when executed by a computer, cause the computer to execute processing that searches for a combination of a plurality of state variable values with which a value of an evaluation function is minimized or maximized by a Markov chain Monte Carlo method, the processing including: reading time-series data from a storage unit that stores the time-series data that indicates a time change of the value of the evaluation function at a time of a search by the Markov chain Monte Carlo method that uses a first temperature; generating a plurality of time-series data sets that includes the value of the evaluation function for each predetermined period on a basis of the time-series data; calculating an index value on a basis of magnitude of correlation between each of the plurality of time-series data sets; and determining a second temperature to be used for the search on a basis of the index value.

### ADVANTAGEOUS EFFECTS OF INVENTION

In one aspect, the embodiments enable automatic determination of a temperature used in the Markov chain Monte Carlo method according to the discrete optimization problem to be calculated.

### BRIEF DESCRIPTION OF DRAWINGS

FIG. 1 is a diagram illustrating an example of a data processing device and a data processing method according to a first embodiment;
FIG. 2 is a diagram (No. 1) illustrating an exemplary time change of E;
FIG. 3 is a diagram (No. 2) illustrating an exemplary time change of E;
FIG. 4 is a block diagram illustrating exemplary hardware of a data processing device according to a second embodiment;
FIG. 5 is a block diagram illustrating exemplary functions of the data processing device;
FIG. 6 is a diagram illustrating an example of two time-series data sets;
FIG. 7 is a diagram illustrating exemplary empirical cumulative distribution functions;
FIG. 8 is a diagram (No. 1) for explaining exemplary clustering;
FIG. 9 is a diagram (No. 2) for explaining exemplary clustering;
FIG. 10 is a diagram illustrating exemplary cluster information;
FIG. 11 is a diagram illustrating exemplary calculation of a transition probability;
FIG. 12 is a diagram illustrating exemplary contribution rates;
FIG. 13 is a flowchart illustrating a flow of an exemplary data processing method for performing a solution search based on simulated annealing;

FIG. 14 is a flowchart (No. 1) illustrating a flow of an exemplary processing procedure for changing T0, a, and γ;

FIG. 15 is a flowchart (No. 2) illustrating a flow of an exemplary processing procedure for changing T0, a, and γ;

FIG. 16 is a flowchart illustrating a flow of an exemplary data processing method for performing a solution search based on a replica exchange method;

FIG. 17 is a flowchart illustrating a flow of an exemplary processing procedure for changing u and v and calculating T(1) to T(n); and

FIG. 18 is a diagram illustrating an exemplary data processing device according to a third embodiment.

DESCRIPTION OF EMBODIMENTS

Hereinafter, modes for carrying out embodiments will be described with reference to the drawings.

(First Embodiment)

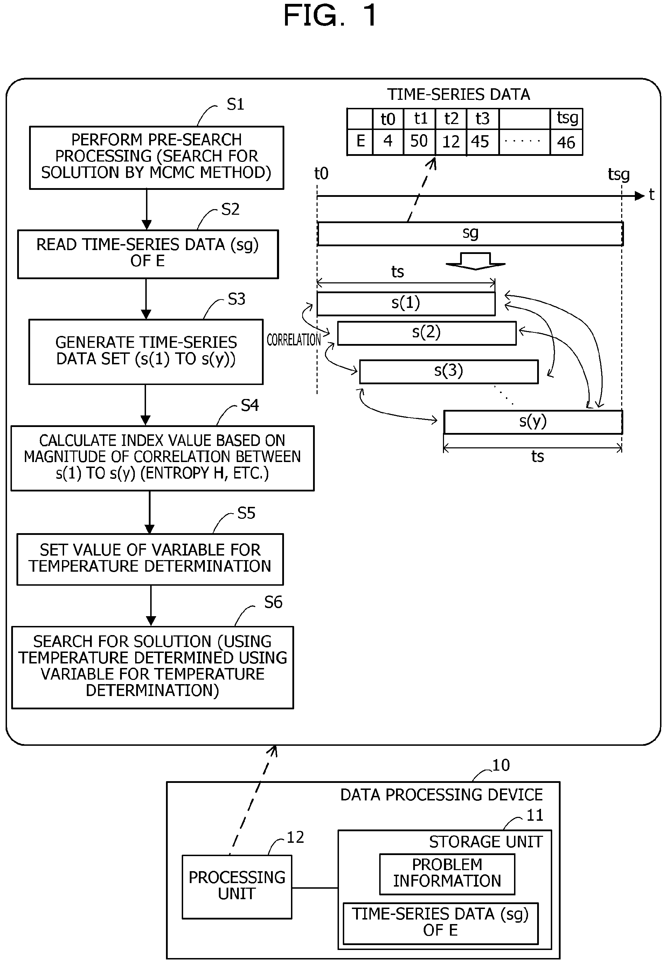

FIG. 1 is a diagram illustrating an example of a data processing device and a data processing method according to a first embodiment.

A data processing device 10 according to the first embodiment searches for a combination of a plurality of state variable values with which a value (energy) of an evaluation function is minimized or maximized by a Markov chain Monte Carlo method (hereinafter referred to as MCMC method). The data processing device 10 includes a storage unit 11 and a processing unit 12.

The storage unit 11 is, for example, a volatile storage device that is an electronic circuit such as a dynamic random access memory (DRAM) or the like, or a non-volatile storage device that is an electronic circuit such as a hard disk drive (HDD), a flash memory, or the like. The storage unit 11 may include an electronic circuit such as a register.

The storage unit 11 stores problem information (evaluation function information) of the discrete optimization problem, and time-series data (sg) indicating a time change of energy (E). The problem information includes, for example, a weight value ($W_{ij}$) and a bias coefficient ($b_i$) of the equation (1) in a case where the evaluation function is expressed by the equation (1).

For example, sg is collected during a preliminary search using the MCMC method. This preliminary search using the MCMC method is carried out using, for example, a temperature determined on the basis of an initial value of a variable for determining the temperature. This temperature may be a fixed value. For example, sg is generated by collecting the value of E obtained each time a process of one Monte Carlo step ends.

The time change of E reflects the difficulty level of the search (that may also be referred to as the difficulty level of the problem).

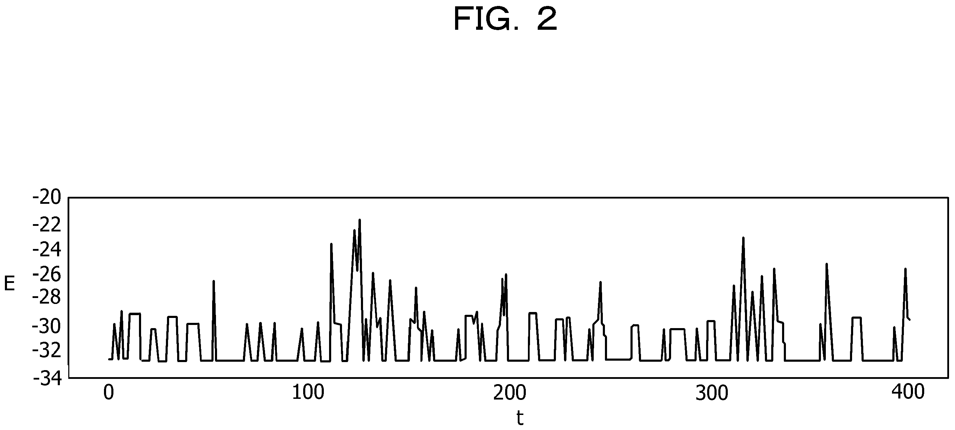

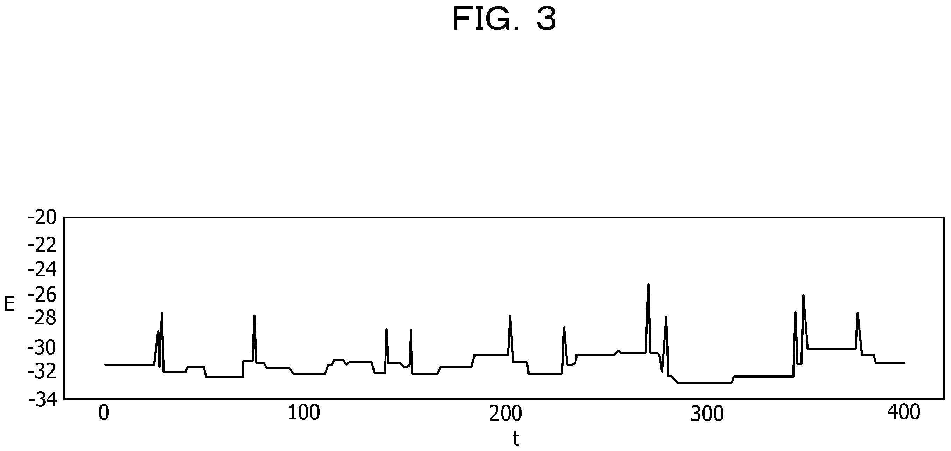

FIGs. 2 and 3 are diagrams illustrating exemplary time changes of E. In FIGs. 2 and 3, the horizontal axis represents time t (corresponding to the number of Monte Carlo steps), and the vertical axis represents energy (E).

In a case where the time change of E at the time of a solution search executed under a certain temperature condition is as illustrated in FIG. 3, the time change of E is smaller than that illustrated in FIG. 2. In such a case, it can be said that the difficulty level of the search is higher than that of the case as illustrated in FIG. 2. For example, in the case as illustrated in FIG. 3, the search may not be carried out efficiently and it may be difficult to obtain a solution, which includes, for example, a case where the solution is constrained to a local solution.

FIG. 1 illustrates an example of the collected sg. The value of E obtained at each time t0, t1, t2, t3, ..., and tsg (e.g., each Monte Carlo step) is contained in sg. For example, sg is represented by vector data with the number of elements = tsg + 1. The number of elements of the vector data is not particularly limited, and is, for example, approximately several hundred.

Note that the storage unit 11 may store various data such as calculation conditions when the processing unit 12 executes a data processing method to be described later, an initial value and updated value of each state variable included in the evaluation function, and the like. The calculation conditions include, for example, calculation conditions for the MCMC methods such as the simulated annealing, the replica exchange method, and the like, calculation termination conditions, and the like. Furthermore, in a case where the processing unit 12 executes a part or all of the processing of the data processing method to be described later by software, the storage unit 11 stores a program for executing the processing.

The processing unit 12 is implemented by, for example, a processor that is hardware such as a central processing unit (CPU), a graphics processing unit (GPU), a digital signal processor (DSP), or the like. Furthermore, the processing unit 12 may be implemented by an electronic circuit such as an application specific integrated circuit (ASIC), a field programmable gate array (FPGA), or the like.

For example, the processing unit 12 searches for a state in which the value (energy) of the evaluation function expressed by the equation (1) is minimized. The state where the minimum value of local minimum values of the evaluation function is reached is to be the optimum solution. Note that the processing unit 12 is also capable of searching for a state in which the value of the evaluation function is maximized by changing the sign of the evaluation function expressed by the equation (1) (in this case, the state where the maximum value is reached is to be the optimum solution).

FIG. 1 illustrates a flow of an exemplary partial process of the processing unit 12.

For example, the processing unit 12 carries out pre-search processing for collecting the time-series data (sg) of E described above (step S1). In the processing of step S1, the processing unit 12 reads out the problem information and the like stored in the storage unit 11, and executes a solution search based on the MCMC methods such as the simulated annealing, the replica exchange method, and the like using, for example, the temperature determined on the basis of the initial value of the variable for determining the temperature. At the time of the search, for example, the values of E obtained in individual Monte Carlo steps are collected, and are stored as sg in the storage unit 11.

Note that sg may be input from the outside of the data processing device 10 and stored in the storage unit 11.

The processing unit 12 reads sg from the storage unit 11 (step S2), and generates, from sg, a plurality of time-series data sets including the value of E for each predetermined period (step S3).

FIG. 1 illustrates an example of y time-series data sets (s(1), s(2), s(3), ..., s(y)). The reference sign s(1) indicates a time-series data set including the values of E for a predetermined period (ts) from the time t0. The reference signs s(2) and s(3) also indicate time-series data sets including the values of E for ts from predetermined time (e.g., time t1 and t2), and s(y) indicates a time-series data set including the values of E for ts from predetermined time to the time tsg.

Note that, although s(1) to s(y) are generated in such a manner that multiple time-series data sets overlap (in such a manner that multiple time-series data sets contain the value of E at the same time) from the time t0 to tsg in the example of FIG. 1, they may be generated not to overlap with each other.

The processing unit 12 calculates an index value representing the difficulty level of the search on the basis of the magnitude of the correlation between each of the multiple time-series data sets (step S4).

In the processing of step S4, first, the processing unit 12 obtains a probability distribution of the values of E included in each of s(1) to s(y) to generate a plurality of probability distributions in order to calculate the index value based on the magnitude of the correlation between each of s(1) to s(y), for example. Then, the processing unit 12 calculates a distance between the individual probability distributions, which represents the magnitude of the correlation mentioned above. Moreover, the processing unit 12 calculates the index value on the basis of the distance between the individual probability distributions. The processing unit 12 obtains, for example, an empirical cumulative distribution function as a probability distribution, and calculates, for example, a Kantorovich distance (also called a Wasserstein distance) as a distance. Exemplary calculation of the empirical cumulative distribution function and the Kantorovich distance will be described later.

The processing unit 12 calculates an index value from the distance between the individual probability distributions by, for example, one or both of the following two methods.

The first method is a method in which a probability that the cluster to which each distance belongs (hereinafter referred to as transition probability) changes is obtained when the clusters are sequentially divided from the state where the entire set of distances is made into one cluster to calculate entropy based on each transition probability as an index value.

The second method is a method in which principal component analysis (or similar method) is performed on a set of dk to calculate a principal component k (k = 1 in a case of a first principal component, k = 2 in a case of a second principal component, and so on) in which the contribution rate is smaller than a predetermined threshold value (e.g., 0.2, etc.) as an index value.

In a case where the time-series data set sg for the time change of E as illustrated in FIG. 3 is obtained, the correlation between the individual generated time-series data sets is smaller than that in the case where the time-series data sg for the time change of E illustrated in FIG. 2. In such a case, the entropy and k are larger than the values calculated on the basis of the time-series data sg for the time change of E illustrated in FIG. 2. For example, the entropy and k represent the difficulty level of the search.

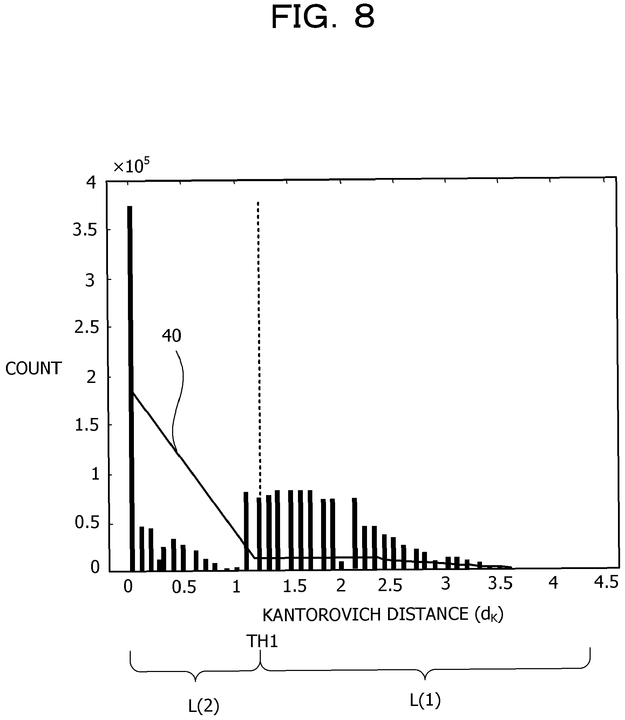

Specific examples of the two methods described above will be described later (see FIGs. 8 to 12).

If the index value calculated in the processing of step S4 is larger than a certain threshold value, the processing unit 12 sets (changes) the current value of the variable for temperature determination to a value from which a temperature higher than the temperature obtained from the current value of the variable for temperature determination is obtained (step S5). This is because raising the temperature promotes changes in the values of the state variables, which makes the solution less likely be constrained to a local solution, and may lower the difficulty level of the search.

While the threshold value may be a fixed value, for example, in a case where time-series data of E are collected again during the solution search in step S6 to be described later and the process of steps S2 to S6 is repeated, the previously obtained index value may be used as the threshold value. Alternatively, an index value obtained on the basis of the time-series data collected during the solution search for a discrete optimization problem (e.g., problem in which the value of $W_{ij}$ or the like in the equation (1) is different from that of the optimization problem to be calculated) represented by problem information different from that of the discrete optimization problem to be calculated may be used as the threshold value.

Note that, if the index value is smaller than a threshold value (threshold value smaller than the threshold value described above) in the processing of step S5, the processing unit 12 may change the current value of the variable for temperature determination to a value from which a temperature lower than the temperature obtained from the current value of the variable for temperature determination is obtained. This is because lowering the temperature may increase the search speed.

The processing unit 12 determines the temperature using the changed variable for temperature determination, and executes a solution search using the temperature (step S6). The solution search is carried out using, for example, the simulated annealing, the replica exchange method, or the like.

Examples of the variable for temperature determination that determines the temperature of the simulated annealing include an initial temperature (T0), the number of Monte Carlo steps (a) in which the same temperature is repeatedly applied, and a temperature drop rate ($\gamma$). If the index value calculated by the processing in step S4 is larger than the threshold value, the value of any or all of T0, a, and $\gamma$ is increased in the processing of step S5, thereby executing the solution search at a temperature higher than the temperature obtained before the values of those variables are changed.

Examples of the variable for temperature determination that determines the temperature of the replica exchange method include u and v in which a temperature $T_i$ set in a replica with a replica number i is determined by the equation $T_i = 1/(v - u \times \log_e i)$. It is possible to change $T_i$ by adjusting the values of u and v.

According to the data processing device 10 and the data processing method described above, the time-series data of the energy at the time of the preliminary search at a certain temperature is obtained, and multiple time-series data sets of E are generated. Then, an index value representing the difficulty level of the search is calculated on the basis of the magnitude of the correlation between each of the multiple time-series data sets, and a new temperature to be used for the search is determined on the basis of the index value. As a result, the data processing device 10 is enabled to automatically determine the new temperature to be used for the search according to the discrete optimization problem to be calculated.

Furthermore, it becomes possible to suppress the situation where more effort and time are taken by trial and error to obtain the appropriate value of the variable for temperature determination by which a temperature corresponding to the discrete optimization problem to be calculated is obtained. Along with this, it becomes possible to shorten the calculation time (solution search time) of the discrete optimization problem.

(Second Embodiment)

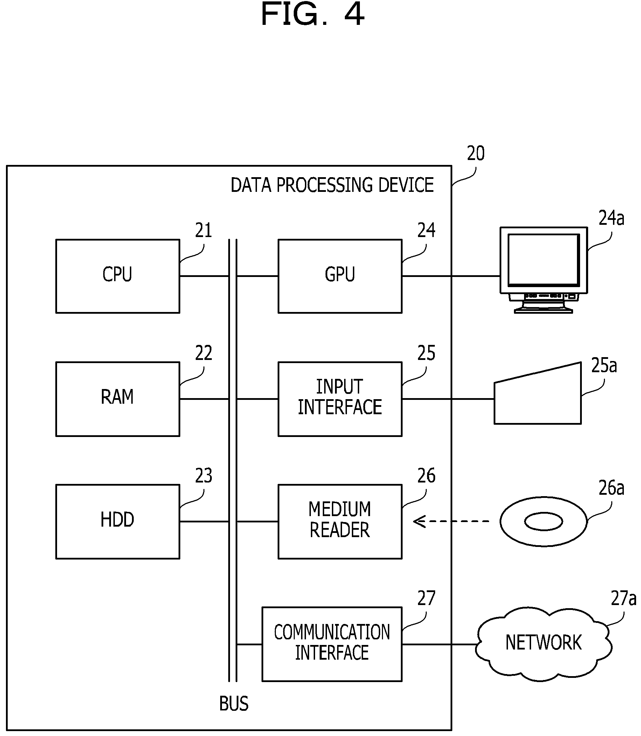

FIG. 4 is a block diagram illustrating exemplary hardware of a data processing device according to a second embodiment.

A data processing device 20 is, for example, a computer, and includes a CPU 21, a random access memory (RAM) 22, an HDD 23, a GPU 24, an input interface 25, a medium reader 26, and a communication interface 27. The units described above are connected to a bus.

The CPU 21 is a processor including an arithmetic circuit that executes program instructions. The CPU 21 loads at least a part of a program and data stored in the HDD 23 into the RAM 22 to execute the program. Note that the CPU 21 may include a plurality of processor cores, the data processing device 20 may include a plurality of processors, and processes to be described below may be executed in parallel by using the plurality of processors or processor cores. Furthermore, a set of a plurality of processors (multiprocessor) may be referred to as a "processor".

The RAM 22 is a volatile semiconductor memory that temporarily stores a program executed by the CPU 21 and data used by the CPU 21 for arithmetic operations. Note that the data processing device 20 may include a memory of a type different from the RAM 22, or may include a plurality of memories.

The HDD 23 is a non-volatile storage device that stores programs of software such as an operating system (OS), middleware, application software, and the like, and data. The programs include, for example, a program for causing the data processing device 20 to execute a process for searching for a solution to a discrete optimization problem. Note that the data processing device 20 may include another type of storage device such as a flash memory, a solid state drive (SSD), or the like, or may include a plurality of non-volatile storage devices.

The GPU 24 outputs an image to a display 24a connected to the data processing device 20 in accordance with a command from the CPU 21. As the display 24a, a cathode ray tube (CRT) display, a liquid crystal display (LCD), a plasma display panel (PDP), an organic electro-luminescence (OEL) display, or the like may be used.

The input interface 25 obtains an input signal from an input device 25a connected to the data processing device 20, and outputs it to the CPU 21. As the input device 25a, a pointing device such as a mouse, a touch panel, a touch pad, or a trackball, a keyboard, a remote controller, a button switch, or the like may be used. Furthermore, a plurality of types of input devices may be connected to the data processing device 20.

The medium reader 26 is a reading device that reads a program and data recorded on a recording medium 26a. As the recording medium 26a, for example, a magnetic disk, an optical disk, a magneto-optical disk (MO), a semiconductor memory, or the like may be used. Examples of the magnetic disk include a flexible disk (FD) and an HDD. Examples of the optical disk include a compact disc (CD) and a digital versatile disc (DVD).

The medium reader 26 copies, for example, a program or data read from the recording medium 26a to another recording medium such as the RAM 22, the HDD 23, or the like. The read program is executed by, for example, the CPU 21. Note that the recording medium 26a may be a portable recording medium, and may be used for distribution of a program or data. Furthermore, the recording medium 26a or the HDD 23 may be referred to as a computer-readable recording medium.

The communication interface 27 is an interface that is connected to a network 27a and communicates with another information processing device via the network 27a. The communication interface 27 may be a wired communication interface connected by a cable to a communication device such as a switch, or may be a wireless communication interface connected to a base station by a wireless link.

Next, functions and processing procedures of the data processing device 20 will be described.

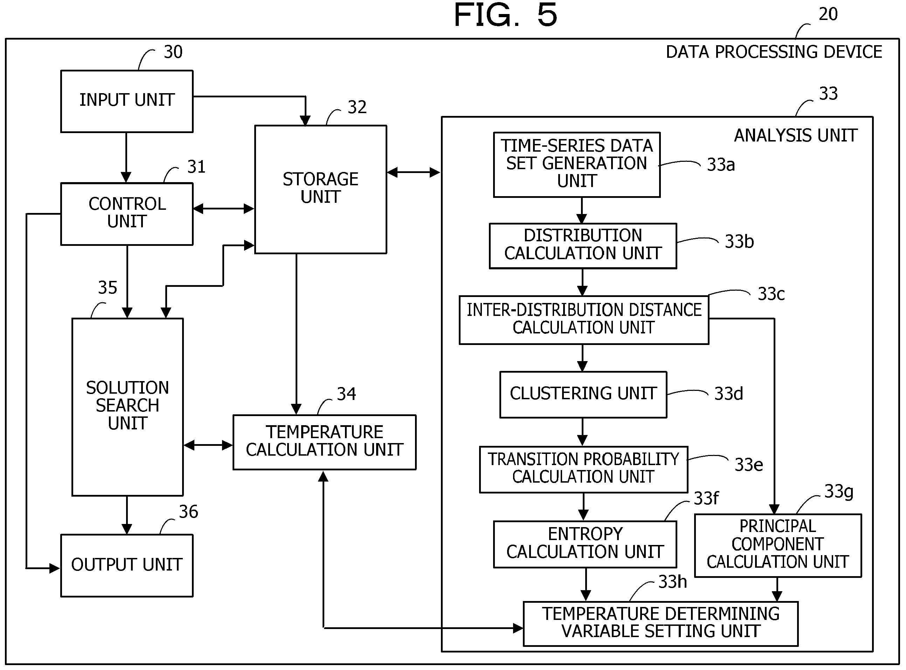

FIG. 5 is a block diagram illustrating exemplary functions of the data processing device.

The data processing device 20 includes an input unit 30, a control unit 31, a storage unit 32, an analysis unit 33, a temperature calculation unit 34, a solution search unit 35, and an output unit 36.

The input unit 30, the control unit 31, the analysis unit 33, the temperature calculation unit 34, the solution search unit 35, and the output unit 36 may be implemented by using, for example, a program module executed by the CPU 21 or a storage area (region or cache memory) in the CPU 21. The storage unit 32 may be implemented by using, for example, a storage area secured in the RAM 22 or the HDD 23.

The input unit 30 receives, for example, input of initial values of state variables ($x_1$ to $x_N$), problem information, and calculation conditions. The problem information includes a weight value ($W_{ij}$) and a bias coefficient ($b_i$) included in the evaluation function of the equation (1).

The calculation conditions include, for example, initial values of variables for temperature determination (T0, a, and $\gamma$ mentioned above) at the time of performing the simulated annealing, the number of replicas, a replica exchange cycle, and initial values of variables for temperature determination (u and v mentioned above) of each replica at the time of executing the replica exchange method, calculation termination conditions, and the like.

Those pieces of information may be input by operation of the input device 25a made by a user, or may be input via the recording medium 26a or the network 27a.

The control unit 31 controls each unit of the data processing device 20 according to the calculation conditions and the like to execute a process to be described later.

The storage unit 32 stores various types of information such as time-series data of E obtained by the solution search unit 35, problem information, and the like.

The analysis unit 33 analyzes the time-series data of E by clustering analysis or principal component analysis, and sets a value of the variable for temperature determination on the basis of the analysis result.

The analysis unit 33 includes a time-series data set generation unit 33a, a distribution calculation unit 33b, an inter-distribution distance calculation unit 33c, a clustering unit 33d, a transition probability calculation unit 33e, an entropy calculation unit 33f, a principal component calculation unit 33g, and a temperature determining variable setting unit 33h.

The time-series data set generation unit 33a reads the time-series data of E from the storage unit 32, and generates multiple time-series data sets (s(1) to s(y)) as illustrated in FIG. 1.

For example, in a case where an element at certain time is larger than $1\sigma$ (= standard deviation) among elements (values of E) included in the time-series data (sg) of E read from the storage unit 32, the time-series data set generation unit 33a deletes that element. This is because the element may be an outlier, and may be deteriorate the calculation accuracy. In a case where the element as described above is deleted, the time-series data set generation unit 33a shifts each element from the next time by one time unit to align vector data. Then, for example, the time-series data set generation unit 33a generates s(1) to s(y) as illustrated in FIG. 1 described above.

The distribution calculation unit 33b obtains a probability distribution of values of E included in each of s(1) to s(y), thereby generating multiple probability distributions. Hereinafter, it is assumed that the distribution calculation unit 33b generates an empirical cumulative distribution function as an example of the probability distribution.

An empirical cumulative distribution function P(x) of a certain time-series data set (s(i)) is a function that expresses the probability of the element of s(i) having a value equal to or less than x. For example, s(i) is assumed to be vector data of s(i) = (4, 50, 12, 45, 58, 42, 17, 77, 10, 46) with the number of elements = 10 to simplify the explanation. Furthermore, it is assumed that x of P(x) is given in increments of 10 from 10 to 100. In this case, P(10) indicates a probability of an element in which s(i) is equal to or less than 10, and in the example described above, there are two elements of 4 and 10 equal to or less than 10, whereby P(10) = 2/10 = 0.2 is established. In a similar manner, P(20) indicates a probability of an element in which s(i) is equal to or less than 20, and in the example described above, there are four elements equal to or less than 20, whereby p(20) = 0.4 is established.

The distribution calculation unit 33b is enabled to obtain the cumulative distribution function P(x) in this manner.

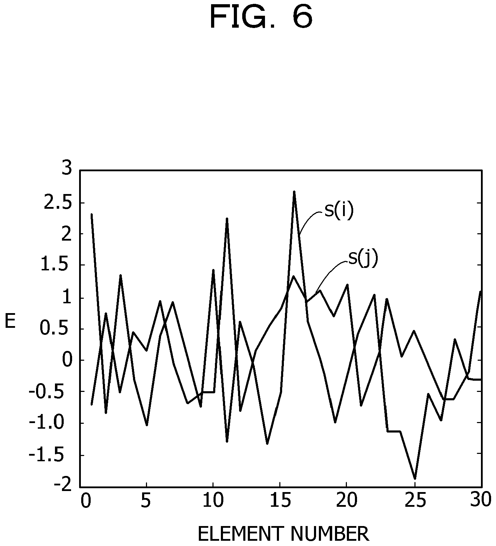

FIG. 6 is a diagram illustrating an example of two time-series data sets. The horizontal axis represents an element number, and the vertical axis represents a value of E. Note that FIG. 6 illustrates an example of two time-series data sets (s(i) and s(j)) with the number of elements of 30. Note that, although the values of E of each element are connected by a straight line in FIG. 6, it does not mean that there are other values between individual elements.

The empirical cumulative distribution function of s(i) and s(j) as illustrated in FIG. 6 may be expressed as the following, for example.

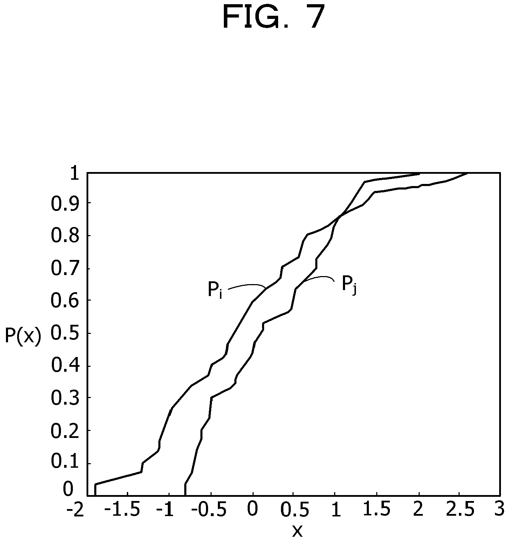

FIG. 7 is a diagram illustrating exemplary empirical cumulative distribution functions. The horizontal axis represents x, and the vertical axis represents P(x). In FIG. 7, $P_i$ indicates an empirical cumulative distribution function generated from s(i), and $P_j$ indicates an empirical cumulative distribution function generated from s(j).

The inter-distribution distance calculation unit 33c calculates an inter-distribution distance between the empirical cumulative distribution functions for each of s(1) to s(y). Hereinafter, descriptions will be given on the assumption that the inter-distribution distance calculation unit 33c calculates a Kantorovich distance as an example of the inter-distribution distance.

The Kantorovich distance ($d_K$) between the empirical cumulative distribution functions $P_i$ and $P_j$ as illustrated in FIG. 7 may be expressed by the following equation (3).

[Equation 3]

$$d_K(P_i\|P_j) = \int_{-\infty}^{\infty} ds \left| \int_{-\infty}^{s} ds'(P_i(s') - P_j(s')) \right| \qquad (3)$$

Note that, although the equation (3) deals with the limit, the value of E is finite, and the cumulative absolute value of the difference between $P_i$ and $P_j$ as illustrated in FIG. 7 (corresponding to the area) is $d_K$. The larger the $d_K$, the greater the degree of distribution inconsistency between $P_i$ and $P_j$.

The inter-distribution distance calculation unit 33c calculates $d_K$ for all combinations of y s(1) to s(y). Accordingly, the count of calculated $d_K$ is $_yC_2$.

The clustering unit 33d classifies $_yC_2$ pieces of $d_K$ ($d_K(1)$, $d_K(2)$, $d_K(3)$, ..., and $d_K(_yC_2)$) into clusters. For example, the clustering unit 33d first divides the cluster sequentially from the state where the entire $d_K(1)$ to $d_K(_yC_2)$ are made into one cluster.

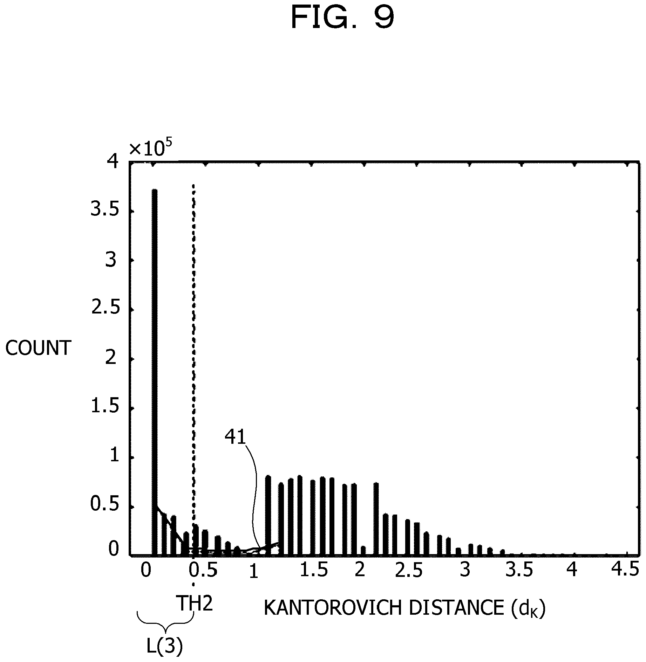

FIGs. 8 and 9 are diagrams for explaining exemplary clustering. The horizontal axis represents a Kantorovich distance ($d_K$), and the vertical axis represents each count of obtained $d_K$.

First, the clustering unit 33d performs extrapolation on the $d_K$ histogram as illustrated in FIG. 8 using a mean value filter to generate a distribution 40.

A method of generating a smooth distribution like the distribution 40 from the histogram is not limited to the method using the mean value filter. For example, the clustering unit 33d may use a technique such as kernel density estimation or the like.

For example, the clustering unit 33d first classifies the entire $d_K$ of the distribution 40 into one cluster L(1). Furthermore, the clustering unit 33d sets $d_K$ closest to 0 among the $d_K$ values that minimize the distribution 40 as a threshold value (TH1). Then, the clustering unit 33d classifies the set of $d_K$ values equal to or less than TH1 into a cluster L(2) obtained by dividing the cluster L(1).

Thereafter, the clustering unit 33d applies the mean value filter again to the set of $d_K$ values equal to or less than TH1 to generate a distribution 41 as illustrated in FIG. 9. Then, the clustering unit 33d sets $d_K$ closest to 0 among the $d_K$ values that minimize the distribution 41 as a threshold value (TH2). Then, the clustering unit 33d classifies the set of $d_K$ values equal to or less than TH2 into a cluster L(3) obtained by dividing the cluster L(2).

The clustering unit 33d repeats the process described above. For example, the classification is terminated when the threshold value does not change. L(i) (i = 1, 2, and so on) to which individual $d_K(1)$ to $d_K(_yC_2)$ are last classified when the classification is terminated are the clusters to which the individual $d_K(1)$ to $d_K(_yC_2)$ belong.

Note that, for example, there is a technique as described in A. Baba and T. Komatsuzaki, "Construction of Effective Free Energy Landscape from Single-Molecule Time Series", PNAS, Vol. 104, No. 49, pp. 19297-19302, 4 December 2007 as an example indicating a relationship between the cluster and the distribution.

The clustering unit 33d outputs cluster information including information regarding transition of L(i) to which each of $d_K(1)$ to $d_K(_yC_2)$ belongs.

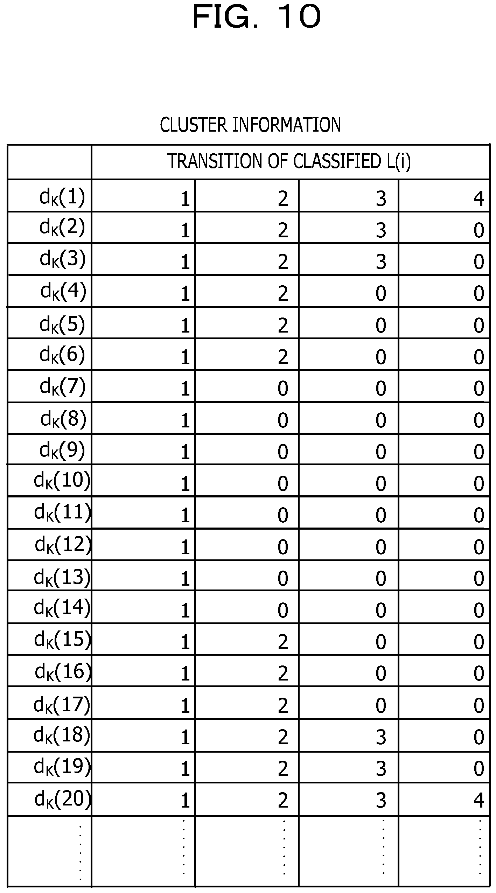

FIG. 10 is a diagram illustrating an example of the cluster information.

FIG. 10 illustrates an example of the cluster information including the transition of L(i) to which each of $d_K(1)$ to $d_K(_yC_2)$ belongs. For example, the cluster to which $d_K(1)$ belongs transitions in the order of L(1), L(2), L(3), and L(4).

The number of clusters becomes larger and more complicated as the number of transitions of the entire $d_K(1)$ to $d_K(_yC_2)$ becomes larger. This means that the difficulty level of the search is higher.

The transition probability calculation unit 33e obtains the probability (transition probability) that $d_K$ belongs to the new cluster generated by the division on the basis of the cluster information output by the clustering unit 33d. Hereinafter, the transition probability when $d_K$ classified into L(i) transitions to L(j) will be referred to as $p_{ij}$. A value of $p_{ij}$ is a value obtained by dividing the number of pieces of $d_K$ transitioned from L(i) to L(j) by the total number of pieces of $d_K$ of L(i) before the generation of L(j).

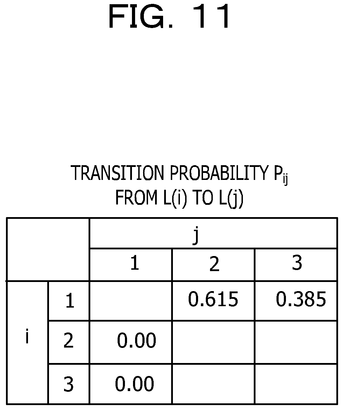

FIG. 11 is a diagram illustrating exemplary calculation of the transition probability.

FIG. 11 illustrates exemplary calculation of some $p_{ij}$. In the example of FIG. 11, it is indicated that a transition probability ($p_{12}$) from L(1) to L(2) is 0.615, and that a transition probability ($p_{13}$) from L(1) to L(3) is 0.385.

Note that the transition probability calculation unit 33e also calculates a probability that $d_K$ stays at L(i) (stay probability ($p_i$)). A value of $p_i$ is a value obtained by dividing, by the total number of pieces of $d_K$ of L(i) before the generation of L(j), the value obtained by subtracting the number of pieces of $d_K$ transitioned to L(j) from the total number of pieces of $d_K$ of L(i) before the generation of L(j).

The entropy calculation unit 33f calculates the entropy from $p_{ij}$ and $p_i$, and outputs it. The entropy (H) may be expressed by the following equation (4).

[Equation 4]

$$ H = - \sum_{i=1}^{n} p_i \left( \sum_{j=1}^{n} p_{ij} \log p_{ij} \right) \tag{4} $$

In the equation (4), n represents the number of generated clusters.

It is indicated that the correlation between time-series data sets becomes smaller and the search becomes more difficult as H becomes larger.

The principal component calculation unit 33g performs principal component analysis on the set of $d_K$ values calculated by the inter-distribution distance calculation unit 33c, calculates a principal component k (k = 1 in a case of a first principal component, k = 2 in a case of a second principal component, and so on) in which the contribution rate is smaller than a predetermined threshold value (e.g., 0.2, etc.), and outputs it.

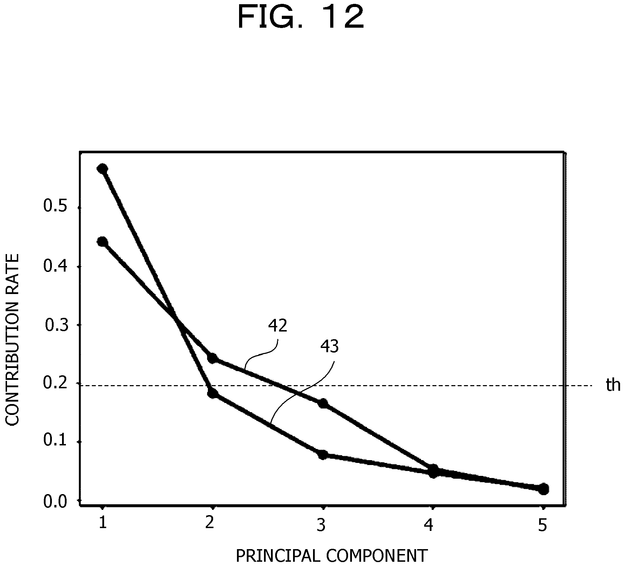

FIG. 12 is a diagram illustrating exemplary contribution rates. The horizontal axis represents a principal component (first principal component, second principal component, and so on), and the vertical axis represents a contribution rate.

FIG. 12 illustrates calculation results 42 and 43 of a contribution rate based on time-series data of E obtained by a solution search performed under two different temperature conditions. Note that the calculation results 42 and 43 are smoothed.

In the example of FIG. 12, the first principal component whose contribution rate is smaller than a threshold value th (0.2 in the example of FIG. 12) counting from the first principal component is the third principal component in the calculation result 42 and the second principal component in the calculation result 43. Accordingly, k = 3 for the calculation result 42, and k = 2 for the calculation result 43.

It is indicated that the correlation between time-series data sets becomes smaller and the search becomes more difficult as k becomes larger.

Note that the principal component calculation unit 33g may set, for example, a reciprocal of the total slope of the contribution rates to the lower dimensions (e.g., first to third principal components) as k.

The temperature determining variable setting unit 33h sets a variable for temperature determination on the basis of a result of comparison between H calculated by the entropy calculation unit 33f or k calculated by the principal component calculation unit 33g and a threshold value.

While the threshold value may be a fixed value, it is also possible to use previously obtained H or k as the threshold value. Alternatively, H or k obtained on the basis of the time-series data collected during the solution search for a discrete optimization problem (e.g., problem in which the value of $W_{ij}$ or the like in the equation (1) is different from that of the optimization problem to be calculated) represented by problem information different from that of the discrete optimization problem to be calculated may be used as the threshold value.

The temperature calculation unit 34 calculates a temperature using the set variable for temperature determination. Examples of the variable for temperature determination that determines the temperature of the simulated annealing include an initial temperature (T0), the number of Monte Carlo steps (a) in which the same temperature is repeatedly applied, and a temperature drop rate (γ). Examples of the variable for temperature determination that determines the temperature of the replica exchange method include u and v in which a temperature $T_i$ set in a replica with a replica number i is determined by the equation $T_i = 1/(v - u \times \log_e i)$. An example of the temperature calculation process will be described later.

The solution search unit 35 carries out a search for a combination (optimum solution) of state variable values that minimize the value of E indicated in the equation (1), for example, on the basis of the problem information read from the storage unit 32 and the temperature calculated by the temperature calculation unit 34 using the MCMC methods such as the simulated annealing, the replica exchange method, and the like.

The output unit 36 outputs a result (calculation result) of the solution search unit 35 under the control of the control unit 31. For example, when the replica exchange method is performed, the output unit 36 outputs, as a calculation result, a state corresponding to the minimum energy of all replicas among the minimum energies stored after a flip determination process is repeated a predetermined number of times in each replica.

For example, the output unit 36 may output the calculation result to the display 24a to be displayed, transmit the calculation result to another information processing device via the network 27a, or store the calculation result in an external storage device.

Hereinafter, a processing procedure (data processing method) of the data processing device 20 will be described.

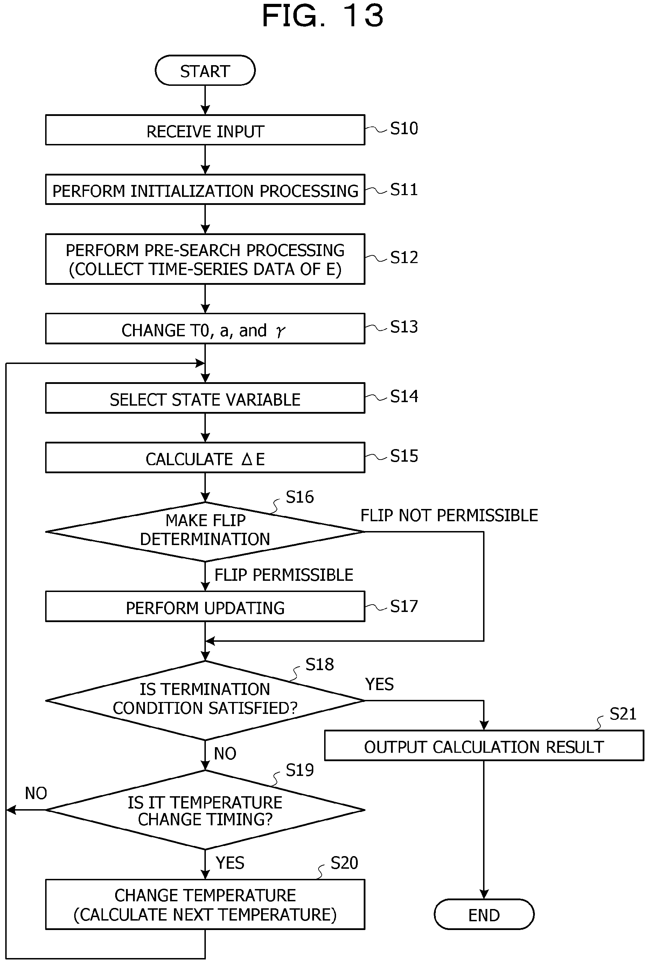

FIG. 13 is a flowchart illustrating a flow of an exemplary data processing method for performing a solution search based on the simulated annealing.

Step S10: The input unit 30 receives input of initial values of $x_1$ to $x_N$, the above-described problem information, and calculation conditions (including initial values of T0, a, and $\gamma$, which are variables for temperature determination used for a search based on the simulated annealing, the number of Monte Carlo steps for performing pre-search processing, etc.). For example, the problem information and the calculation conditions are stored in the storage unit 32.

Step S11: An initialization process is performed under the control of the control unit 31. For example, the initial values of $x_1$ to $x_N$ are set in the solution search unit 35. Furthermore, the solution search unit 35 calculates an initial value of E on the basis of the initial values of $x_1$ to $x_N$, $W_{ij}$, and the like. The initial values of T0, a, and $\gamma$, which are variables for temperature determination, are set in the temperature calculation unit 34.

Step S12: The solution search unit 35 performs pre-search processing. In the pre-search processing, a solution search based on the simulated annealing of a predetermined number of Monte Carlo steps is carried out using the temperature calculated on the basis of the initial values of T0, a, and $\gamma$, which are variables for temperature determination. The solution search is carried out by a process similar to the process of steps S14 to S20 to be described later. In the pre-search processing of step S12, for example, the values of E obtained in the individual Monte Carlo steps are collected, and are stored in the storage unit 32 as time-series data (sg) as illustrated in FIG. 1.

Step S13: The analysis unit 33 performs a change process of T0, a, and $\gamma$ on the basis of the collected sg. A procedure of the change process will be described later.

Step S14: The solution search unit 35 selects a state variable of a candidate (hereinafter referred to as a flip candidate) to be subject to a value change from $x_1$ to $x_N$. The solution search unit 35 selects state variables of flip candidates at random or in a predetermined order, for example.

Step S15: The solution search unit 35 calculates a change amount ($\Delta E$) of E expressed by the equation (2) in the case where the value of the selected state variable changes.

Step S16: The solution search unit 35 determines whether or not to permit the change in the value of the state variable of the flip candidate (whether or not the flip is permissible) on the basis of a result of comparison between $\Delta E$ and a predetermined value. Hereinafter, this determination process will be referred to as a flip determination process.

The predetermined value is, for example, a noise value obtained on the basis of a random number and a temperature. For example, in a case where $\Delta E$ is smaller than $\log(\text{rand}) \times T$, which is an example of the noise value obtained on the basis of a uniform random number (rand) of 0 or more and 1 or less and a temperature (T), the solution search unit 35 determines to permit the change in the value of the state variable of the flip candidate.

The solution search unit 35 performs the processing of step S17 if it is determined that the flip is permissible, and performs the processing of step S18 if it is determined that the flip is not permissible.

Step S17: The solution search unit 35 changes the value of the state variable selected in the processing of step S14, thereby updating the state stored in the storage unit 32 and also updating the value of E in association with the change.

Step S18: The solution search unit 35 determines whether or not a predetermined termination condition is satisfied. For example, the solution search unit 35 determines that the termination condition is satisfied when the count of the flip determination reaches a predetermined number of Monte Carlo steps. The processing of step S19 is performed if it is determined that the termination condition is not satisfied, and the processing of step S21 is performed if it is determined that the termination condition is satisfied.

Step S19: The temperature calculation unit 34 determines whether or not it is the temperature change timing. For example, in a case where the remainder obtained by dividing the current count of the flip determination by a, which is the number of Monte Carlo steps in which the same temperature is repeatedly applied, is 0, the temperature calculation unit 34 determines that it is the temperature change timing.

The processing of step S20 is performed if it is determined that it is the temperature change timing, and the process from step S14 is repeated if it is determined that it is not the temperature change timing.

Step S20: The temperature calculation unit 34 changes the temperature by calculating the next temperature. The temperature calculation unit 34 calculates the next temperature by multiplying the current temperature T by the temperature drop rate ($\gamma$), which is one of the variables for temperature determination.

After the processing of step S20, the process from step S14 is repeated.

Step S21: The output unit 36 outputs the combination (state) of the state variable values when the termination condition is satisfied as a calculation result of the discrete optimization problem. Note that the solution search unit 35 may update and retain the value of E (minimum energy), which is the minimum value so far, and the corresponding state at any time, and the output unit 36 may output the state corresponding to the minimum energy at the time point when the termination condition is satisfied as a calculation result.

As a result, the process of searching for a solution based on the simulated annealing performed by the data processing device 20 is terminated.

Note that the storage unit 32 may collect the values of E for a predetermined number of Monte Carlo steps obtained after the individual flip determination processes as time-series data (sg), and the analysis unit 33 may repeat a process of changing T0, a, and $\gamma$ on the basis of sg at a predetermined frequency.

Next, an exemplary processing procedure for changing T0, a, and $\gamma$ performed by the analysis unit 33 will be described.

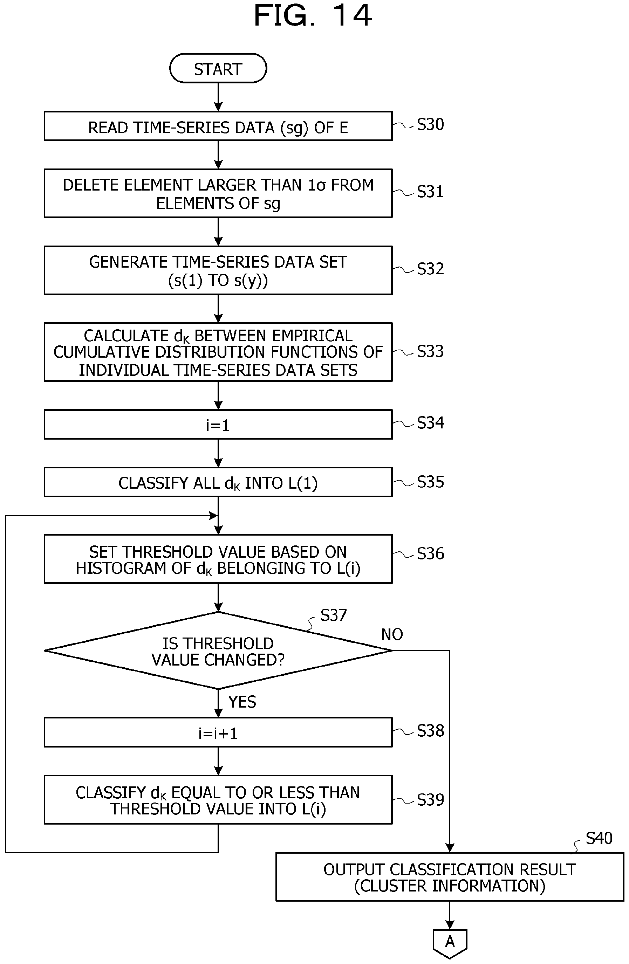

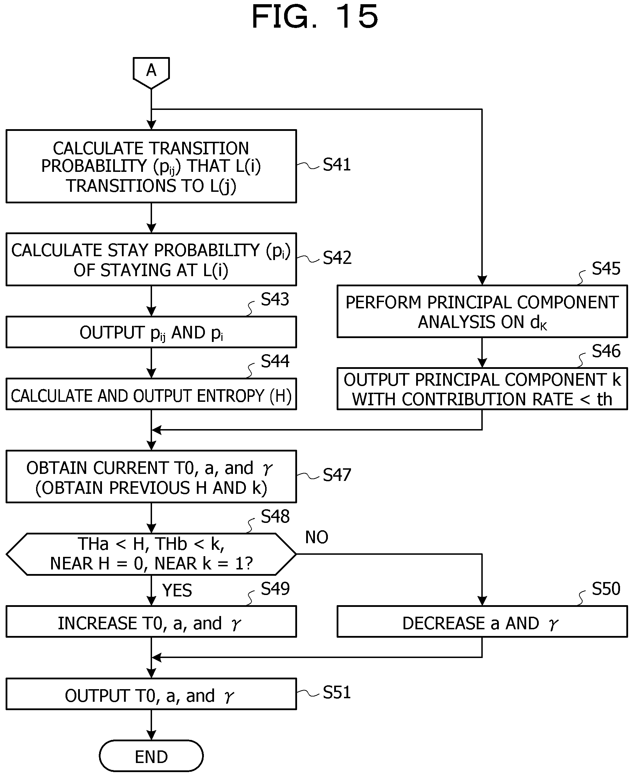

FIGs. 14 and 15 are flowcharts illustrating a flow of an exemplary processing procedure for changing T0, a, and $\gamma$.

Step S30: The time-series data set generation unit 33a reads the time-series data (sg) of E from the storage unit 32.

Step S31: If an element at certain time is larger than $1\sigma$ (= standard deviation), the time-series data set generation unit 33a deletes the element among elements (values of E) of sg. In a case where the element as described above is deleted, the time-series data set generation unit 33a shifts each element from the next time by one time unit to align vector data.

Step S32: The time-series data set generation unit 33a generates, for example, s(1) to s(y) as illustrated in FIG. 1 described above.

Step S33: The distribution calculation unit 33b generates an empirical cumulative distribution function for each of s(1) to s(y) as described above (see FIG. 7). Then, as described above, the inter-distribution distance calculation unit 33c calculates the Kantorovich distance (e.g., expressed by equation (3) mentioned above) between the empirical cumulative distribution functions for each of s(1) to s(y).

Step S34: The clustering unit 33d first sets a variable i for identifying a cluster to 1.

Step S35: The clustering unit 33d classifies all the pieces of $d_K$ into L(1).

Step S36: The clustering unit 33d generates a distribution as illustrated in FIGs. 8 and 9 on the basis of the histogram of $d_K$ belonging to the cluster L(i), and sets a threshold value by the method described above.

Step S37: The clustering unit 33d determines whether or not the threshold value has changed with respect to the previously set threshold value. The clustering unit 33d performs the processing of step S38 if it is determined that the threshold value has changed with respect to the previously set threshold value, and performs the processing of step S40 if it is determined that the threshold value has not changed.

Step S38: The clustering unit 33d sets i = i + 1.

Step S39: The clustering unit 33d classifies $d_K$ equal to or less than the set threshold value into L(i), and repeats the process from step S36.

Step S40: The clustering unit 33d outputs the cluster information as illustrated in FIG. 10 including information regarding the transition of L(i) to which each of $d_K(1)$ to $d_K(_yC_2)$ belongs.

Step S41: The transition probability calculation unit 33e calculates the transition probability ($p_{ij}$) described above when $d_K$ classified into L(i) transitions to L(j) on the basis of the cluster information output by the clustering unit 33d.

Step S42: The transition probability calculation unit 33e calculates the above-described stay probability ($p_i$) that $d_K$ stays at L(i).

Step S43: The transition probability calculation unit 33e outputs $p_{ij}$ and $p_i$.

Step S44: The entropy calculation unit 33f calculates and outputs the entropy (H) (e.g., expressed by equation (4) described above) from $p_{ij}$ and $p_i$.

Step S45: The principal component calculation unit 33g performs the principal component analysis on the set of $d_K$ values calculated by the inter-distribution distance calculation unit 33c.

Step S46: The principal component calculation unit 33g outputs the principal component k with the contribution rate < th (e.g., 0.2, etc.) as described above (see FIG. 12), for example.

Note that the data (H, k, etc.) obtained in the processing of each step described above may be stored in the storage unit 32 as appropriate, for example.

Step S47: The temperature determining variable setting unit 33h obtains the values of T0, a, and $\gamma$, which are the current variables for temperature determination, from the temperature calculation unit 34, for example. Note that, if the previously obtained H or k is used as the threshold value in the processing of step S47, the temperature determining variable setting unit 33h obtains them from, for example, the storage unit 32.

Step S48: The temperature determining variable setting unit 33h determines whether or not H calculated by the entropy calculation unit 33f is larger than a predetermined threshold value (THa) or whether or not k calculated by the principal component calculation unit 33g is larger than a predetermined threshold value (THb). If the change of the variable for temperature determination is repeated at a predetermined frequency, THa may be previously obtained H, and THb may be previously obtained k. Furthermore, the temperature determining variable setting unit 33h determines whether or not it is near H = 0 or near k = 1. When it is near H = 0 or near k = 1, for example, the values of $x_1$ to $x_N$ have hardly changed (e.g., because the solution is constrained to the local solution), whereby it is desirable to promote changes in the values of $x_1$ to $x_N$ by increasing the temperature.

It is possible to determine whether or not it is near H = 0 or near k = 1 by determining whether or not H is within a predetermined range from H = 0 or whether or not k is within a predetermined range from k = 1.

If the temperature determining variable setting unit 33h determines that THa < H, THb < k, and H = near 0 or k = near 1, it performs the processing of step S49. If the temperature determining variable setting unit 33h determines that THa < H is not satisfied, THb < k is not satisfied, H = near 0 is not satisfied, and k = near 1 is also not satisfied, it performs the processing of step S50.

Step S49: The temperature determining variable setting unit 33h increases the values of T0, a, and $\gamma$, which are the variables for temperature determination. For example, the temperature determining variable setting unit 33h increases T0 by 1, the value of a by 10, and the value of $\gamma$ by 0.1. Since $\gamma$ represents a temperature drop rate, it is less than 1.0. Note that the temperature determining variable setting unit 33h may increase any one or two of the values of T0, a, or $\gamma$.

Step S50: The temperature determining variable setting unit 33h decreases the values of a, and $\gamma$, which are the variables for temperature determination. For example, the temperature determining variable setting unit 33h keeps the value of T0 as it is, and decreases the value of a by 10 and the value of $\gamma$ by 0.1. Note that the temperature determining variable setting unit 33h may decrease the value of any one of a and $\gamma$.

Step S51: The temperature determining variable setting unit 33h outputs the values of T0, a, and $\gamma$. The output T0, a, and $\gamma$ are used by the temperature calculation unit 34 to calculate a temperature.

Note that the processing flows illustrated in FIGs. 13 to 15 are examples, and the processing order may be changed as appropriate.

For example, while the process of steps S41 to S44 is illustrated to be performed in parallel with the process of steps S45 and S46 in FIG. 15, the process of steps S41 to S44 may be performed before or after the process of steps S45 and S46.

Furthermore, only one of the process of steps S41 to S44 and the process of steps S45 and S46 may be performed.

According to the data processing method described above, it becomes possible to automatically set the variable for temperature determination in the simulated annealing, and to automatically determine the temperature used in the simulated annealing according to the discrete optimization problem to be calculated.

Next, a data processing method for performing a solution search based on the replica exchange method will be described.

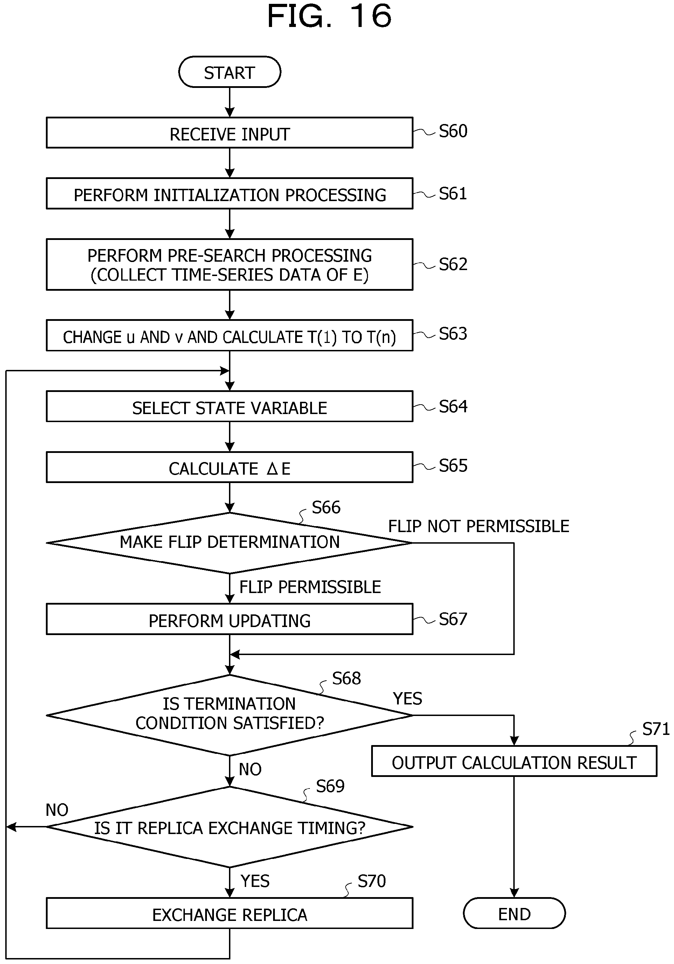

FIG. 16 is a flowchart illustrating a flow of an exemplary data processing method for performing a solution search based on the replica exchange method.

Step S60: The input unit 30 receives input of initial values of $x_1$ to $x_N$, the above-described problem information, and calculation conditions (including the number of replicas, a replica exchange cycle, initial values of u and v, which are variables for temperature determination of each replica, the number of Monte Carlo steps for performing pre-search processing, etc.). For example, the problem information and the calculation conditions are stored in the storage unit 32.

Step S61: An initialization process is performed under the control of the control unit 31. For example, the initial values of $x_1$ to $x_N$ are set in each replica of the solution search unit 35. Furthermore, the solution search unit 35 calculates an initial value of E on the basis of the initial values of $x_1$ to $x_N$, $W_{ij}$, and the like. The initial values of u and v, which are variables for temperature determination, are set in the temperature calculation unit 34. Note that the number of replicas is assumed to be n in the following descriptions.

Step S62: The solution search unit 35 performs pre-search processing. In the pre-search processing, for example, the temperature calculated by the equation $T_i = 1/(v - u \times \log_e i)$ is set for each replica on the basis of the initial values of u and v, which are the variables for temperature determination, and the solution search based on the replica exchange method is carried out. The solution search based on the replica exchange method is carried out by a process similar to the process of steps S64 to S70 to be described later. In the pre-search processing of step S62, for example, the values of E obtained in the individual Monte Carlo steps are collected for each replica, and are stored in the storage unit 32 as time-series data (sg) as illustrated in FIG. 1.

Step S63: The analysis unit 33 changes u and v on the basis of the collected sg, and the temperature calculation unit 34 calculates T(1) to T(n). T(1) to T(n) represent temperatures set for the replicas with the replica numbers i = 1 to n, and T(1) > T(2) ... > T(n). A procedure of the processing in step S63 will be described later.

Step S64: The solution search unit 35 selects a state variable of a flip candidate from $x_1$ to $x_N$ for each replica. The solution search unit 35 selects state variables of flip candidates at random or in a predetermined order, for example.

Step S65: The solution search unit 35 calculates a change amount ($\Delta E$) of E expressed by the equation (2) in the case where the value of the selected state variable changes in each replica.

Step S66: The solution search unit 35 carries out a flip determination process for each replica on the basis of a result of comparison between $\Delta E$ and a noise value.

The solution search unit 35 performs the processing of step S67 if it is determined that the flip is permissible, and performs the processing of step S68 if it is determined that the flip is not permissible.

Step S67: The solution search unit 35 changes the value of the state variable selected in the processing of step S64 in the replica in which the flip is determined to be permissible, thereby updating the state of that replica stored in the storage unit 32. Moreover, the solution search unit 35 also updates the value of E in association with the change.

Step S68: The solution search unit 35 determines whether or not a predetermined termination condition is satisfied. For example, the solution search unit 35 determines that the termination condition is satisfied when the count of the flip determination reaches a predetermined number of Monte Carlo steps. The processing of step S69 is performed if it is determined that the termination condition is not satisfied, and the processing of step S71 is performed if it is determined that the termination condition is satisfied.

Step S69: The solution search unit 35 determines whether or not it is the replica exchange timing. For example, if the remainder obtained by dividing the current count of the flip determination by the number of Monte Carlo steps indicating the replica exchange cycle is 0, the solution search unit 35 determines that it is the replica exchange timing.

The processing of step S70 is performed if it is determined that it is the replica exchange timing, and the process from step S64 is repeated if it is determined that it is not the replica exchange timing.

Step S70: The solution search unit 35 executes replica exchange.

For example, the solution search unit 35 randomly selects two of a plurality of replicas, and exchanges the values of $x_1$ to $x_N$ with the value of E between the selected two replicas at a predetermined exchange probability based on the difference in energy or temperature value between the replicas.

After the processing of step S70, the process from step S64 is repeated.

Step S71: The solution search unit 35 updates and retains the value of E (minimum energy), which is the minimum value so far, and the corresponding state at any time, and the output unit 36 outputs the state corresponding to the minimum energy at the time point when the termination condition is satisfied as a calculation result.

As a result, the process of searching for a solution based on the replica exchange method performed by the data processing device 20 is terminated.

Note that the storage unit 32 may collect, as the time-series data (sg), the values of E for a predetermined number of Monte Carlo steps obtained after the individual flip determination processes in each replica. Then, the analysis unit 33 may repeat a process of changing u and v on the basis of sg for each replica at a predetermined frequency.

Next, an exemplary processing procedure for changing u and v with the analysis unit 33 and calculating T(1) to T(n) will be described.

If sg is collected for each replica in the pre-search processing, the analysis unit 33 performs, for example, the process of steps S30 to S46 illustrated in FIGs. 14 and 15 for each replica.

Thereafter, the temperature determining variable setting unit 33h of the analysis unit 33 and the temperature calculation unit 34 perform the following process.

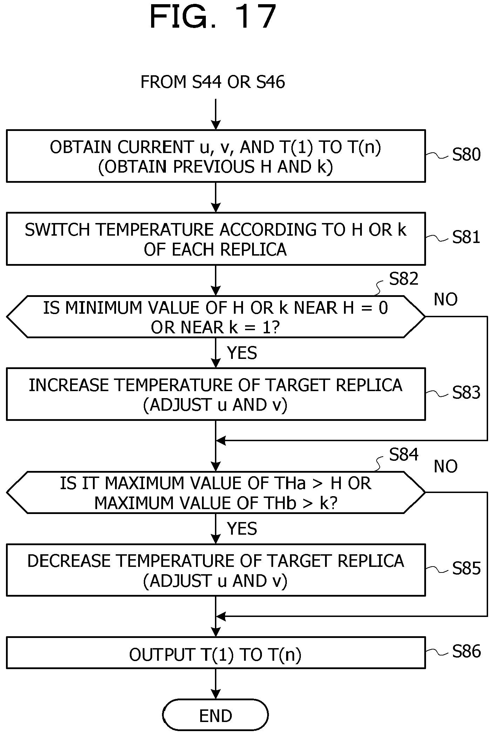

FIG. 17 is a flowchart illustrating a flow of an exemplary processing procedure for changing u and v and calculating T(1) to T(n).

Step S80: The temperature determining variable setting unit 33h obtains the values of u and v, which are the current variables for temperature determination, and the current temperature (T(1) to T(n)) from, for example, the temperature calculation unit 34. Note that, if the previously obtained H or k for each replica is used as the threshold value in the processing of step S84, the temperature determining variable setting unit 33h obtains them from, for example, the storage unit 32.

Step S81: The temperature determining variable setting unit 33h and the temperature calculation unit 34 switch the temperature according to H or k of each replica obtained by the process up to step S46. For example, the temperature is switched in such a manner that the higher temperature among T(1) to T(n) is assigned to the replica with larger H or k. This is because the search in that temperature becomes more difficult as H or k becomes larger, as mentioned above.

Step S82: The temperature determining variable setting unit 33h determines whether or not the minimum value of H or k of each replica is near H = 0 or near k = 1. It is possible to determine whether or not it is near H = 0 or near k = 1 by determining whether or not H is within a predetermined range from H = 0 or whether or not k is within a predetermined range from k = 1.

If the temperature determining variable setting unit 33h determines that the minimum value of H or k of each replica is near H = 0 or near k = 1, it performs the processing of step S83. If the temperature determining variable setting unit 33h determines that the minimum value of H or k of each replica is neither near H = 0 nor near k = 1, it performs the processing of step S84.

Step S83: In order to increase the temperature of the target replica in which H or k is the minimum value mentioned above, the temperature determining variable setting unit 33h adjusts (changes) the values of u and v for that replica.

Such a process is performed because, when it is near H = 0 or near k = 1, for example, the values of $x_1$ to $x_N$ have hardly changed (e.g., because the solution is constrained to the local solution), and thus it is desirable to promote changes in the values of $x_1$ to $x_N$ by increasing the temperature. The values of u and v are adjusted in such a manner that a temperature increase becomes approximately 1, for example.

Note that, if the value of T(i) among T(1) to T(n) increases to become a value same as (or a value that may be regarded as the same) the value of T(i - 1) by the adjustment described above, the temperature determining variable setting unit 33h also raises the value of T(i - 1) in a similar manner.

Step S84: The temperature determining variable setting unit 33h determines whether or not the maximum value of H of the individual replicas is smaller than a predetermined threshold value (THa) or whether or not the maximum value of k of the individual replicas is smaller than a predetermined threshold value (THb). If the change of the variable for temperature determination is repeated at a predetermined frequency, THa may be the maximum value of previously obtained H of the individual replicas, and THb may be the maximum value of previously obtained k of the individual replicas.

The processing of step S85 is performed if it is determined to be the maximum value of THa > H or the maximum value of THb > k, and the processing of step S86 is performed if it is determined to be neither the maximum value of THa > H nor THb > k.

Step S85: In order to decrease the temperature of the target replica in which H or k is the maximum value mentioned above, the temperature determining variable setting unit 33h adjusts (changes) the values of u and v for that replica. Such a process is performed to facilitate a solution convergence because, if it is the maximum value of THa > H or the maximum value of THb > k, there is a possibility that the temperature has been overly increased.

The values of u and v are adjusted in such a manner that a temperature decrease becomes approximately 1, for example.

Note that, if the value of T(i) among T(1) to T(n) decreases to become a value same as (or a value that may be regarded as the same) the value of T(i + 1) by the adjustment described above, the temperature determining variable setting unit 33h also lowers the value of T(i + 1) in a similar manner.

Step S86: The temperature calculation unit 34 calculates new T(1) to T(n) on the basis of u and v adjusted as described above, and outputs the determined T(1) to T(n).

Note that the processing flows illustrated in FIGs. 16 to 17 are examples, and the processing order may be changed as appropriate.

Furthermore, in a similar manner to the case of using the simulated annealing, if the maximum value of H or the maximum value of k is larger than a predetermined threshold value, the temperature determining variable setting unit 33h may adjust the values of u and v to increase the temperature of the target replica.

According to the data processing method described above, it becomes possible to automatically set the variable for temperature determination in the replica exchange method, and to automatically determine the temperature used in the replica exchange method according to the discrete optimization problem to be calculated.

Note that, as described above, the processing contents described above may be implemented by causing the data processing device 20 to execute a program.

The program may be recorded in a computer-readable recording medium (e.g., recording medium 26a). As the recording medium, for example, a magnetic disk, an optical disk, a magneto-optical disk, a semiconductor memory, or the like may be used. Examples of the magnetic disk include an FD and an HDD. Examples of the optical disk include a CD, a CD-recordable (R)/rewritable (RW), a DVD, and a DVD-R/RW. The program may be recorded in a portable recording medium and distributed. In that case, the program may be copied from the portable recording medium to another recording medium (e.g., HDD 23) and then executed.

(Third Embodiment)

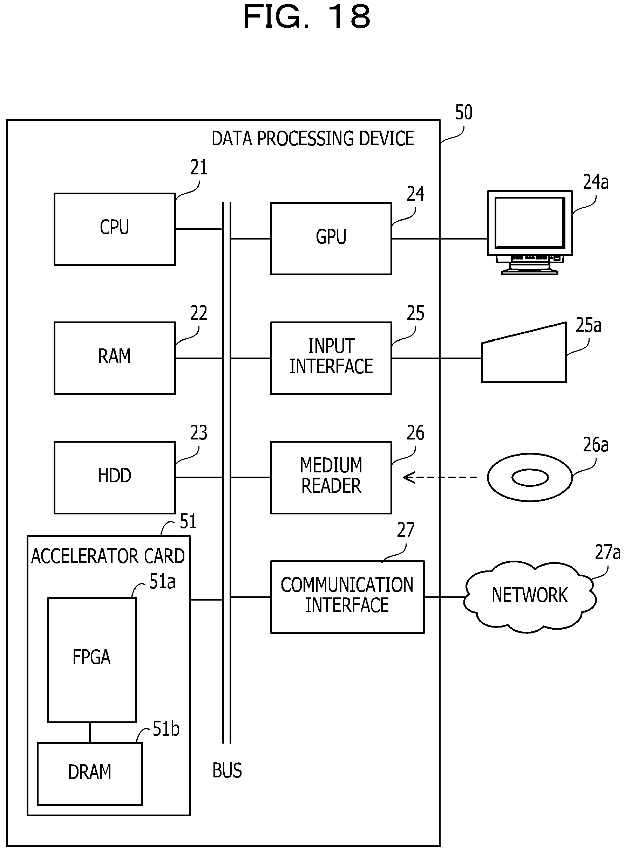

FIG. 18 is a diagram illustrating an exemplary data processing device according to a third embodiment. In FIG. 18, the elements same as those illustrated in FIG. 4 are denoted by the same reference signs.

A data processing device 50 according to the third embodiment includes an accelerator card 51 connected to a bus.

The accelerator card 51 is a hardware accelerator that searches for a solution to a discrete optimization problem. The accelerator card 51 includes an FPGA 51a and a DRAM 51b.

In the data processing device 50 according to the third embodiment, for example, the FPGA 51a performs the processing of the solution search unit 35 illustrated in FIG. 5. Furthermore, the DRAM 51b may function as the storage unit 32 illustrated in FIG. 5. Note that, while the processing of the control unit 31, the analysis unit 33, and the temperature calculation unit 34 in FIG. 5 may be performed by the CPU 21, it may be performed by the FPGA 51a.

There may be a plurality of the accelerator cards 51.

The data processing device 50 having the hardware configuration described above is also capable of performing the processing similar to that of the data processing device 20 according to the second embodiment, and similar effects may be obtained.

While one aspect of the program, one aspect of the data processing method, and one aspect of the data processing device of the embodiments have been described on the basis of the embodiments, these are merely examples, and are not limited to the descriptions above.

**Claims**

1. A program comprising instructions which, when executed by a computer, cause the computer to execute processing that searches for a combination of a plurality of state variable values with which a value of an evaluation function is minimized or maximized by a Markov chain Monte Carlo method, the processing comprising:

    reading time-series data from a storage unit that stores the time-series data that indicates a time change of the value of the evaluation function at a time of a search by the Markov chain Monte Carlo method that uses a first temperature;
    generating a plurality of time-series data sets that includes the value of the evaluation function for each predetermined period on a basis of the time-series data;
    calculating an index value on a basis of magnitude of correlation between each of the plurality of time-series data sets; and
    determining a second temperature to be used for the search on a basis of the index value.

2. The program according to claim 1, causing the computer to execute the process further comprising:

    setting a value of a variable for temperature determination such that the second temperature higher than the first temperature is obtained in a case where the index value is larger than a first threshold value, wherein the index value increases as the correlation becomes lower.

3. The program according to claim 1 or 2, causing the computer to execute the process further comprising:

    generating a plurality of probability distributions by obtaining a probability distribution of the value of the evaluation function included in each of the plurality of time-series data sets;
    calculating a distance between each of the plurality of probability distributions that indicates the magnitude of correlation; and
    calculating the index value on a basis of the distance between each of the plurality of probability distributions.

4. The program according to claim 3, wherein the plurality of probability distributions includes an empirical cumulative distribution function.

5. The program according to claim 3 or 4, wherein the distance includes a Kantorovich distance.

6. The program according to any one of claims 3 to 5, causing the computer to execute the process further comprising:

    dividing a cluster sequentially from a state where an entire set of the distance is made into one cluster on a basis of a histogram of the distance between each of the plurality of probability distributions;
    calculating a probability that the cluster to which the distance belongs changes; and
    calculating an entropy that is the index value on a basis of the probability.

7. The program according to any one of claims 3 to 6, causing the computer to execute the process further comprising:

    performing principal component analysis on the distance between each of the plurality of probability distributions; and
    using, as the index value, a principal component with a contribution rate lower than a second threshold value.

8. The program according to any one of claims 1 to 7, wherein
the index value represents a difficulty level of the search by the Markov chain Monte Carlo method.

9. A data processing method implemented by a computer configured to execute a process that searches for a combination of a plurality of state variable values with which a value of an evaluation function is minimized or maximized by a Markov chain Monte Carlo method, the data processing method comprising:

   reading time-series data from a storage unit that stores the time-series data that indicates a time change of the value of the evaluation function at a time of a search by the Markov chain Monte Carlo method that uses a first temperature;
   generating a plurality of time-series data sets that includes the value of the evaluation function for each predetermined period on a basis of the time-series data;
   calculating an index value on a basis of magnitude of correlation between each of the plurality of time-series data sets; and
   determining a second temperature to be used for the search on a basis of the index value.

10. A data processing apparatus of searching for a combination of a plurality of state variable values with which a value of an evaluation function is minimized or maximized by a Markov chain Monte Carlo method, the data processing apparatus comprising:

   a storage unit that stores the time-series data that indicates a time change of the value of the evaluation function at a time of a search by the Markov chain Monte Carlo method that uses a first temperature; and
   a processing unit that performs processing including:

      reading the time-series data from the storage unit;
      generating a plurality of time-series data sets that includes the value of the evaluation function for each predetermined period on a basis of the time-series data;
      calculating an index value on a basis of magnitude of correlation between each of the plurality of time-series data sets; and
      determining a second temperature to be used for the search on a basis of the index value.

# FIG. 1

**TIME-SERIES DATA**

|   | t0 | t1 | t2 | t3 |  | tsg |
|---|----|----|----|----|-----|-----|
| E | 4 | 50 | 12 | 45 | · · · · · | 46 |

S1

PERFORM PRE-SEARCH PROCESSING (SEARCH FOR SOLUTION BY MCMC METHOD)

S2

READ TIME-SERIES DATA (sg) OF E

S3

GENERATE TIME-SERIES DATA SET (s(1) TO s(y))

CORRELATION

sg

ts

s(1)

s(2)

s(3)

s(y)

ts

S4

CALCULATE INDEX VALUE BASED ON MAGNITUDE OF CORRELATION BETWEEN s(1) TO s(y) (ENTROPY H, ETC.)

S5

SET VALUE OF VARIABLE FOR TEMPERATURE DETERMINATION

S6

SEARCH FOR SOLUTION (USING TEMPERATURE DETERMINED USING VARIABLE FOR TEMPERATURE DETERMINATION)

10

DATA PROCESSING DEVICE

11

STORAGE UNIT

PROBLEM INFORMATION

12

PROCESSING UNIT

TIME-SERIES DATA (sg) OF E

EP 4 170 558 A1

# FIG. 2

EP 4 170 558 A1

# FIG. 3

# FIG. 4

DATA PROCESSING DEVICE 20

CPU 21

RAM 22

HDD 23

GPU 24 — 24a

INPUT INTERFACE 25 — 25a

MEDIUM READER 26 — 26a

COMMUNICATION INTERFACE 27 — NETWORK 27a

BUS

## FIG. 5

DATA PROCESSING DEVICE 20

INPUT UNIT 30

CONTROL UNIT 31

STORAGE UNIT 32

SOLUTION SEARCH UNIT 35

TEMPERATURE CALCULATION UNIT 34

OUTPUT UNIT 36

ANALYSIS UNIT 33

TIME-SERIES DATA SET GENERATION UNIT 33a

DISTRIBUTION CALCULATION UNIT 33b

INTER-DISTRIBUTION DISTANCE CALCULATION UNIT 33c

CLUSTERING UNIT 33d

TRANSITION PROBABILITY CALCULATION UNIT 33e

ENTROPY CALCULATION UNIT 33f

PRINCIPAL COMPONENT CALCULATION UNIT 33g

TEMPERATURE DETERMINING VARIABLE SETTING UNIT 33h

EP 4 170 558 A1

# FIG. 6

# FIG. 7

# FIG. 8

# FIG. 9

# FIG. 10

CLUSTER INFORMATION

| | TRANSITION OF CLASSIFIED L(i) | | | |
|---|---|---|---|---|
| $d_K(1)$ | 1 | 2 | 3 | 4 |
| $d_K(2)$ | 1 | 2 | 3 | 0 |
| $d_K(3)$ | 1 | 2 | 3 | 0 |
| $d_K(4)$ | 1 | 2 | 0 | 0 |
| $d_K(5)$ | 1 | 2 | 0 | 0 |
| $d_K(6)$ | 1 | 2 | 0 | 0 |
| $d_K(7)$ | 1 | 0 | 0 | 0 |
| $d_K(8)$ | 1 | 0 | 0 | 0 |
| $d_K(9)$ | 1 | 0 | 0 | 0 |
| $d_K(10)$ | 1 | 0 | 0 | 0 |
| $d_K(11)$ | 1 | 0 | 0 | 0 |
| $d_K(12)$ | 1 | 0 | 0 | 0 |
| $d_K(13)$ | 1 | 0 | 0 | 0 |
| $d_K(14)$ | 1 | 0 | 0 | 0 |
| $d_K(15)$ | 1 | 2 | 0 | 0 |
| $d_K(16)$ | 1 | 2 | 0 | 0 |
| $d_K(17)$ | 1 | 2 | 0 | 0 |
| $d_K(18)$ | 1 | 2 | 3 | 0 |
| $d_K(19)$ | 1 | 2 | 3 | 0 |
| $d_K(20)$ | 1 | 2 | 3 | 4 |
| ⋮ | ⋮ | ⋮ | ⋮ | ⋮ |

# FIG. 11

TRANSITION PROBABILITY $P_{ij}$
FROM L(i) TO L(j)

| | | j | | |
|---|---|---|---|---|
| | | 1 | 2 | 3 |
| i | 1 | | 0.615 | 0.385 |
| | 2 | 0.00 | | |
| | 3 | 0.00 | | |

# FIG. 12

# FIG. 13

```
            ( START )
                │
    ┌───────────▼───────────┐
    │     RECEIVE INPUT      │──── S10
    └───────────┬───────────┘
                │
    ┌───────────▼───────────┐
    │ PERFORM INITIALIZATION │──── S11
    │      PROCESSING        │
    └───────────┬───────────┘
                │
    ┌───────────▼───────────────┐
    │  PERFORM PRE-SEARCH        │
    │  PROCESSING                │──── S12
    │  (COLLECT TIME-SERIES      │
    │   DATA OF E)               │
    └───────────┬───────────────┘
                │
    ┌───────────▼───────────┐
    │  CHANGE T0, a, and γ   │──── S13
    └───────────┬───────────┘
                │
    ┌───────────▼───────────┐
    │  SELECT STATE VARIABLE │──── S14
    └───────────┬───────────┘
                │
    ┌───────────▼───────────┐
    │     CALCULATE △E       │──── S15
    └───────────┬───────────┘
                │
              S16
         ◇ MAKE FLIP ◇──── FLIP NOT PERMISSIBLE
         ◇ DETERMINATION ◇
                │ FLIP PERMISSIBLE
    ┌───────────▼───────────┐
    │   PERFORM UPDATING     │──── S17
    └───────────┬───────────┘
                │
              S18
         ◇ IS TERMINATION ◇──── YES ──── ┌──────────────────────────┐
         ◇ CONDITION SATISFIED? ◇        │ OUTPUT CALCULATION RESULT │──── S21
                │ NO                     └──────────────┬───────────┘
              S19                                       │
    NO ─── ◇ IS IT TEMPERATURE ◇                     ( END )
           ◇ CHANGE TIMING? ◇
                │ YES
              S20
    ┌───────────▼───────────┐
    │  CHANGE TEMPERATURE    │
    │ (CALCULATE NEXT        │
    │  TEMPERATURE)          │
    └───────────────────────┘
```

# FIG. 14

```
                    ( START )
                        |
                        v
        +------------------------------------+
        |  READ TIME-SERIES DATA (sg) OF E   |--- S30
        +------------------------------------+
                        |
                        v
        +------------------------------------+
        | DELETE ELEMENT LARGER THAN 1σ FROM |--- S31
        |         ELEMENTS OF sg             |
        +------------------------------------+
                        |
                        v
        +------------------------------------+
        |    GENERATE TIME-SERIES DATA SET   |--- S32
        |          (s(1) TO s(y))            |
        +------------------------------------+
                        |
                        v
        +------------------------------------+
        |  CALCULATE $d_K$ BETWEEN EMPIRICAL |--- S33
        | CUMULATIVE DISTRIBUTION FUNCTIONS  |
        |  OF INDIVIDUAL TIME-SERIES DATA SETS|
        +------------------------------------+
                        |
                        v
        +------------------------------------+
        |               i=1                  |--- S34
        +------------------------------------+
                        |
                        v
        +------------------------------------+
        |      CLASSIFY ALL $d_K$ INTO L(1)  |--- S35
        +------------------------------------+
                        |
                        v
        +------------------------------------+
        |     SET THRESHOLD VALUE BASED ON   |--- S36
        |  HISTOGRAM OF $d_K$ BELONGING TO L(i)|
        +------------------------------------+
                        |
                        v           S37
            <   IS THRESHOLD   >  NO
            <  VALUE CHANGED?  >------+
                        |            |
                       YES           |
                        v            |
        +------------------------------------+
        |               i=i+1                |--- S38
        +------------------------------------+
                        |            |
                        v            |
        +------------------------------------+
        | CLASSIFY $d_K$ EQUAL TO OR LESS THAN|--- S39
        |     THRESHOLD VALUE INTO L(i)      |
        +------------------------------------+
                        |            |
                        v            v
                             +------------------------------------+
                             |   OUTPUT CLASSIFICATION RESULT     |--- S40
                             |       (CLUSTER INFORMATION)        |
                             +------------------------------------+
                                            |
                                            v
                                          ( A )
```

# FIG. 15

A

CALCULATE TRANSITION
PROBABILITY ($p_{ij}$) THAT L(i)
TRANSITIONS TO L(j) — S41

CALCULATE STAY PROBABILITY ($p_i$)
OF STAYING AT L(i) — S42

OUTPUT $p_{ij}$ AND $p_i$ — S43

CALCULATE AND OUTPUT ENTROPY (H) — S44

PERFORM PRINCIPAL COMPONENT
ANALYSIS ON $d_K$ — S45

OUTPUT PRINCIPAL COMPONENT k
WITH CONTRIBUTION RATE < th — S46

OBTAIN CURRENT T0, a, and $\gamma$
(OBTAIN PREVIOUS H AND k) — S47

S48
THa < H, THb < k,
NEAR H = 0, NEAR k = 1?   NO

YES — S49

INCREASE T0, a, and $\gamma$

DECREASE a AND $\gamma$ — S50

OUTPUT T0, a, and $\gamma$ — S51

END

31

# FIG. 16

```
        START
          │
          ▼
┌──────────────────────────┐
│      RECEIVE INPUT        │──S60
└──────────────────────────┘
          │
          ▼
┌──────────────────────────┐
│ PERFORM INITIALIZATION    │──S61
│       PROCESSING          │
└──────────────────────────┘
          │
          ▼
┌──────────────────────────┐
│ PERFORM PRE-SEARCH        │──S62
│ PROCESSING                │
│ (COLLECT TIME-SERIES      │
│  DATA OF E)               │
└──────────────────────────┘
          │
          ▼
┌──────────────────────────┐
│ CHANGE u AND v AND        │──S63
│ CALCULATE T(1) TO T(n)    │
└──────────────────────────┘
          │
          ▼
┌──────────────────────────┐
│   SELECT STATE VARIABLE   │──S64
└──────────────────────────┘
          │
          ▼
┌──────────────────────────┐
│      CALCULATE ΔE         │──S65
└──────────────────────────┘
          │
          ▼
      ◇ S66                     FLIP NOT PERMISSIBLE
  MAKE FLIP DETERMINATION ─────────────────────────┐
          │                                          │
     FLIP PERMISSIBLE                                │
          ▼                                          │
┌──────────────────────────┐                         │
│     PERFORM UPDATING      │──S67                    │
└──────────────────────────┘                         │
          │◄───────────────────────────────────────┘
          ▼
      ◇ S68                          YES
  IS TERMINATION ──────────────────────────┐
  CONDITION SATISFIED?                      │
          │                                 ▼
          NO                    ┌──────────────────────────┐── S71
          ▼                     │ OUTPUT CALCULATION RESULT │
      ◇ S69                     └──────────────────────────┘
NO   IS IT REPLICA                         │
◄─── EXCHANGE TIMING?                       ▼
          │                              ( END )
         YES  S70
          ▼
┌──────────────────────────┐
│    EXCHANGE REPLICA       │
└──────────────────────────┘
```

# FIG. 17

FROM S44 OR S46

OBTAIN CURRENT u, v, AND T(1) TO T(n)
(OBTAIN PREVIOUS H AND k) — S80

SWITCH TEMPERATURE ACCORDING TO H OR k
OF EACH REPLICA — S81

S82

IS MINIMUM VALUE OF H OR k NEAR H = 0
OR NEAR k = 1? — NO

YES

INCREASE TEMPERATURE OF TARGET REPLICA
(ADJUST u AND v) — S83

S84  NO

IS IT MAXIMUM VALUE OF THa > H OR
MAXIMUM VALUE OF THb > k?

YES

DECREASE TEMPERATURE OF TARGET REPLICA
(ADJUST u AND v) — S85

OUTPUT T(1) TO T(n) — S86

END

# FIG. 18

DATA PROCESSING DEVICE 50

21 CPU

24 GPU — 24a

22 RAM

25 INPUT INTERFACE — 25a

23 HDD

26 MEDIUM READER — 26a

51 ACCELERATOR CARD

51a FPGA

51b DRAM

27 COMMUNICATION INTERFACE — 27a NETWORK

BUS

Europäisches
Patentamt

European
Patent Office

Office européen
des brevets

# EUROPEAN SEARCH REPORT

**Application Number**

EP 22 18 0698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 876 118 A1 (FUJITSU LTD [JP]) 8 September 2021 (2021-09-08) * claims 1-20; figures 1-5 * * paragraph [0005] – paragraph [0093] * ----- | 1-10 | INV. G06N7/00 ADD. G06N3/04 |
| A | GIOVANNI PISTONE ET AL: "Finite space Kantorovich problem with an MCMC of table moves", ARXIV.ORG, CORNELL UNIVERSITY LIBRARY, 201 OLIN LIBRARY CORNELL UNIVERSITY ITHACA, NY 14853, 13 January 2021 (2021-01-13), XP081857941, * the whole document * ----- | 5 | |
| A | DABIRI KEIVAN ET AL: "Replica Exchange MCMC Hardware With Automatic Temperature Selection and Parallel Trial", IEEE TRANSACTIONS ON PARALLEL AND DISTRIBUTED SYSTEMS, IEEE, USA, vol. 31, no. 7, 5 March 2020 (2020-03-05), pages 1681-1692, XP011776259, ISSN: 1045-9219, DOI: 10.1109/TPDS.2020.2972359 [retrieved on 2020-03-04] * the whole document * ----- | 1-10 | |
| A | LEV YU BARASH ET AL: "GPU accelerated population annealing algorithm", ARXIV.ORG, CORNELL UNIVERSITY LIBRARY, 201 OLIN LIBRARY CORNELL UNIVERSITY ITHACA, NY 14853, 10 March 2017 (2017-03-10), XP080756083, DOI: 10.1016/J.CPC.2017.06.020 * the whole document * ----- -/-- | 1-10 | |

**TECHNICAL FIELDS SEARCHED (IPC)**

G06N

The present search report has been drawn up for all claims

| Place of search | Date of completion of the search | Examiner |
|---|---|---|
| The Hague | 7 December 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

**Application Number**

EP 22 18 0698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAVARRO CRISTÓBAL A ET AL: "Adaptive multi-GPU Exchange Monte Carlo for the 3D Random Field Ising Model", COMPUTER PHYSICS COMMUNICATION, ELSEVIER SCIENCE PUBLISHERS B.V., AMSTERDAM, NL, vol. 205, 27 April 2016 (2016-04-27), pages 48-60, XP029560587, ISSN: 0010-4655, DOI: 10.1016/J.CPC.2016.04.007 * the whole document * | 1-10 | |
| A | EP 3 869 362 A1 (FUJITSU LTD [JP]) 25 August 2021 (2021-08-25) * the whole document * | 1-10 | |
| A | US 2021/073438 A1 (AKIYAMA YUJI [JP]) 11 March 2021 (2021-03-11) * the whole document * | 1-10 | |
| A | US 2021/319154 A1 (DOTE AKI [JP] ET AL) 14 October 2021 (2021-10-14) * the whole document * | 1-10 | TECHNICAL FIELDS SEARCHED (IPC) |

The present search report has been drawn up for all claims

| Place of search | Date of completion of the search | Examiner |
|---|---|---|
| The Hague | 7 December 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 0698

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2022

| Patent document cited in search report | | Publication date | Patent family member(s) | | Publication date |
|---|---|---|---|---|---|
| EP 3876118 | A1 | 08-09-2021 | CN | 113361185 A | 07-09-2021 |
| | | | EP | 3876118 A1 | 08-09-2021 |
| | | | JP | 2021140779 A | 16-09-2021 |
| | | | US | 2021279652 A1 | 09-09-2021 |
| EP 3869362 | A1 | 25-08-2021 | CN | 113342403 A | 03-09-2021 |
| | | | EP | 3869362 A1 | 25-08-2021 |
| | | | JP | 2021131611 A | 09-09-2021 |
| | | | US | 2021256179 A1 | 19-08-2021 |
| US 2021073438 | A1 | 11-03-2021 | CN | 112262397 A | 22-01-2021 |
| | | | JP | 6775711 B2 | 28-10-2020 |
| | | | JP | WO2019234837 A1 | 03-09-2020 |
| | | | US | 2021073438 A1 | 11-03-2021 |
| | | | WO | 2019234837 A1 | 12-12-2019 |
| US 2021319154 | A1 | 14-10-2021 | CN | 113536229 A | 22-10-2021 |
| | | | EP | 3896622 A1 | 20-10-2021 |
| | | | JP | 2021168096 A | 21-10-2021 |
| | | | US | 2021319154 A1 | 14-10-2021 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019234837 A

- JP 2020046718 A

### Non-patent literature cited in the description

- **S. GEMAN ; D. GEMAN.** Stochastic Relaxation, Gibbs Distributions, and the Bayesian Restoration of Images. *IEEE Transactions on Pattern Analysis and Machine Intelligence,* November 1984, vol. PAMI-6 (6
- **HIDETOSHI NISHIMORI.** Theory of Spin Glass and Statistical-Mechanical Informatics. Iwanami Shoten, Publishers, 25 July 2007, 183
- **T. YOKOTA ; M. KONOSHIMA ; H. TAMURA ; J. OHKUBO.** Derivation of QUBO Formulations for Sparse Estimation. *arXiv: 2001.03715v2,* 27 January 2020

- **K. HUKUSHIMA.** Domain-Wall Free-Energy of Spin Glass Models: Numerical Method and Boundary Conditions. *Physical Review E,* October 1999, vol. 60 (4
- **A. BABA ; T. KOMATSUZAKI.** Construction of Effective Free Energy Landscape from Single-Molecule Time Series. *PNAS,* 04 December 2007, vol. 104 (49), 19297-19302